# Europäisches Patentamt

## European Patent Office

## Office européen des brevets

(11) Veröffentlichungsnummer: **0 127 767 B1**

(12) **EUROPÄISCHE PATENTSCHRIFT**

(45) Veröffentlichungstag der Patentschrift:
24.06.87

(21) Anmeldenummer: 84104855.6

(22) Anmeldetag: 30.04.84

(51) Int. Cl.⁴: **C 09 J 3/16, C 08 L 61/06, C 08 L 61/34 // (C08L61/06, 5:00)**

---

(54) Verfahren zum Verleimen von Massivholz sowie Leimharze, enthaltend Polysaccharide.

---

(30) Priorität: 05.05.83 DE 3316352

(43) Veröffentlichungstag der Anmeldung:
12.12.84 Patentblatt 84/50

(45) Bekanntmachung des Hinweises auf die Patenterteilung:
24.06.87 Patentblatt 87/26

(84) Benannte Vertragsstaaten:
AT CH DE FR IT LI NL SE

(56) Entgegenhaltungen:
EP - A - 0 096 797
DE - C - 853 929
US - A - 2 570 892
US - A - 2 613 167
US - A - 2 878 197
US - A - 3 700 612

CHEMICAL ABSTRACTS, Band 84, Nr. 20, 17. Mai 1976, Seite 62, Nr. 136842t, Columbus, Ohio, USA; & SE - A - 370 546 (AKTIEBOLAG CASCO) 21.10.1974
Römpps Chemie-Lexikon (1979), Seite 110
Kirk-Othmer, Encyclopedia of Chemical Technology, 3. Edition, Vol. 5 (1979), Seite 146

(73) Patentinhaber: BASF Aktiengesellschaft,
Carl-Bosch-Strasse 38, D-6700 Ludwigshafen (DE)

(72) Erfinder: Fritsch, Robert, An der Neumuehle 2,
D-6724 Dudenhofen (DE)
Erfinder: Schatz, Hermann, Neubergstrasse 50,
D-6730 Neustadt (DE)
Erfinder: Merkel, Dieter, Dr., Homburger Strasse 8,
D-6700 Ludwigshafen (DE)
Erfinder: Matthias, Guenther, Dr., Meergartemweg 25a,
D-6710 Frankenthal (DE)
Erfinder: Winter, Juergen, Hubestrasse 31,
D-6940 Weinheim (DE)
Erfinder: Neumann, Claus, Dr. Dipl.-Holzwirt,
Schoefferstrasse 27, D-6520 Worms 1 (DE)

---

**Beschreibung**

Die vorliegende Erfindung betrifft ein neues Verfahren zum Verleimen von Massivholz sowie Leimharze, enthaltend bestimmte Polysaccharide, die in diesem Verfahren zur Anwendung kommen.

Bei der Herstellung von Massivholzteilen, z.B. Balken, Trägern oder Bögen für die Bauholzindustrie werden Holzschichten oder Laminate mehrlagig miteinander verleimt.

Sowohl beim Auftragen der Leimflotte, bestehend üblicherweise aus Leimharz, Härter und Füllstoff, als auch beim sich anschliessenden Senkrechtstapeln der beleimten Holzteile tropft Leim ab.

Hieraus ergeben sich mehrere Nachteile. So verarmen beim Senkrechtstapeln die oberen Teile der Holzbretter an Leim und die Bretter werden seitlich mit Leim verschmiert.

Weiterhin werden die Maschinen für die nachfolgenden Arbeitsgänge verschmutzt; die notwendigen Reinigungsarbeiten belasten das Abwasser. Zudem sei auf die auftretenden Verluste an Leimflotte hingewiesen.

Es ist eine Reihe von Lösungsversuchen ausgearbeitet worden, um diese Probleme zu lösen.

Das einfachste Verfahren wäre das Waagrechtstapeln der beleimten Bretter. Dies bringt allerdings den Nachteil mit sich, dass man die Lagen nicht oder nur mit sehr hohem technischen Aufwand zu Bögen spannen kann. Die Herstellung gebogener Träger ist aber Hauptanwendungszweck, da solche Träger beim Bau z.B. von Turn-, Schwimm- oder Lagerhallen benötigt werden.

Nach dem Vorschlag der DE-A-28 20 907 sollen beim Beleimen Leimharz und Härter getrennt voneinander in Form von Schnüren aufgetragen werden. Die Viskosität der Komponenten Harz und Härter ist so gewählt, dass die Schnüre bei senkrecht gestellten Brettern nur langsam fliessen. Dadurch ist die Verunreinigung vermieden.

Von Nachteil ist aber, dass sich die Schnüre erst beim Zusammenpressen miteinander vereinigen und eine homogene Vermischung der Reaktanten nur bedingt gewährleistet ist. Bei nicht homogener Durchmischung leidet die Festigkeit und zudem kann nicht ausgehärteter oder unzureichend ausgehärteter Leim aus den Seiten treten.

Im sogenannten Untermischverfahren, bei welchem Leimharz, Härter und Füllstoffe vorgemischt werden, wird durch Zusatz viskositätsanhebender Stoffe die Zähigkeit der Leimflotte erhöht, so dass diese nur langsam abläuft. Solche Stoffe sind unter anderem amorphes Siliciumdioxid, Schichtsilikate (z.B. Bentonit, China-Clay) oder Kieselgur. Diese anorganischen Zusätze verspröden die Leimfuge und bewirken einen starken Abrieb der Hobelmesser und Sägen. Aus Gesundheitsgründen sind bei der Handhabung hier ausserdem besondere Vorsichtsmassnahmen erforderlich.

In der US-A 3 755 067 wird vorgeschlagen, Phenoplastharzen, die bei der Sperrholzherstellung zur Anwendung kommen, 6 bis 16 Gew.-%, bezogen auf den Festharzanteil, thioxotrop wirkende Asbestfasern zuzusetzen. In Anbetracht der dabei verwendeten grossen Mengen an Asbest und dessen hoher Gesundheitsschädlichkeit erscheint dieses Verfahren aber nicht praktikabel. Die US-A-2 878 197 betrifft thixotrope Phenol- und Furfural-Leimharze für Sperrholz, welche eine verringerte Tendenz zur Entmischung, einen gleichmässigeren Auftrag bei unterschiedlicher Holzoberflächenbeschaffenheit, eine geringere Tendenz zum Einziehen in die beleimte Holzoberfläche unter Leimverlust, sowie eine verringerte Fluidität und damit verzögerte Austrocknung des aufgetragenen Leims ergeben sollen. (Spalte 3, Zeilen 21–42). Hierzu wird eine Kombination aus einem cellulosehaltigen Extender und einem Füllmittel im Leimharz vorgeschlagen, wobei der Anteil an Extender mit einem Verhältnis Extender zu Harzfestmasse von 0,3:1 bis 0,45:1 sehr hoch ist, was bei einem Leimansatz von 50% einer Konzentration von 15 bis 23 Gew.-% entspricht, während anmeldungsgemäss unter diesen Bedingungen nur eine um eine Zehnerpotenz geringere Konzentration erforderlich ist.

Man kann auch viskositätsanhebende Zusätze auf organischer Basis verwenden; dies sind im allgemeinen die Polysaccharide Stärke, Alginsäure oder Carboxymethylcellulose, vgl. CA 84, No. 20, S. 62, Nr. 13842. Dadurch neigt aber die Leimflotte beim Aufbringen zum Fadenziehen.

Der Erfindung liegt die Aufgabe zugrunde, ein Verfahren zum Verleimen von Massivholz mit den Merkmalen des Oberbegriffs des Anspruchs 1 beziehungsweise ein Leimharz zur Verfügung zu stellen, bei dem nicht nur ein Ablaufen des Leims vom Holz vermieden wird, sondern auch beim Leimauftrag kein Fadenziehen erfolgt. Die Fadenziehung stört z.B. bei Beendigung des maschinellen Auftrags in ganz erheblichem Masse durch Verschmutzung der Auftragsmaschine den Produktionsablauf. Dasselbe Problem tritt an den Endflächen der zu beleimenden Hölzer auf. Diese Aufgabe wird gelöst durch die Lehre des Kennzeichens des Anspruchs 1 bzw. die Lehre des Anspruchs 3.

Es wurde somit gefunden, dass man Massivholz mittels Leimharzen auf der Basis von Kondensationsprodukten aus Phenol, Formaldehyd und Resorcin oder auf der Basis von Kondensationsprodukten aus Helamin, Harnstoff, Phenol und Formaldehyd vorteilhaft verleimen kann, wenn man die Verleimung mit Leimharzen und/oder Härtermischungen durchführt, die 0,01 bis 2,0 Gew.-% eines Polysaccharids enthalten, das in wässriger Flüssigkeit thixotropie verursacht, wobei es sich beim Polysaccharid um ein D-Galacto-D-mannan, das verethert sein kann, oder ein Xanthan, handelt.

Die Leimharze auf der Basis von Kondensationsprodukten aus Phenol, Formaldehyd und Resorcin oder auf der Basis von Kondensationsprodukten aus Melamin, Harnstoff, Phenol und Formaldehyd sind die üblichen, zum Verleimen von Massivholz verwendeten Bindemittel. Sie sind als wässrige Lösungen oder Pulver im Handel. Ihre Herstellung und Verwendung ist allgemein bekannt und für die Erfindung ohne Belang.

Für die Durchführung des erfindungsgemässen Verfahrens sind die in den Ansprüchen genannten Polysaccharide geeignet. Sie verursachen in wässrigem Medium Thixotropie.

Unter Thixotropie versteht man den Effekt, dass durch Einwirkung von Scherkräften die vorher sehr hohe Viskosität fliessender Stoffe stark erniedrigt wird, wobei sich nach Beendigung der Scherkrafteinwirkung die Viskosität zeitabhängig wieder erhöht. In der vorliegenden Erfindung soll darunter aber auch der Effekt verstanden werden, dass sich die Viskosität nach Beendigung der Scherkrafteinwirkung sofort wieder erhöht. Dieser Effekt wird im allgemeinen durch den Begriff «Strukturviskosität» charakterisiert.

D-Galacto-D-mannane sind Verbindungen, deren Mannan-Kette aus (1,4)-glycosidisch verknüpften β-D-Mannopyranoseeinheiten aufgebaut ist. Das Verhältnis von D-Galactose zu D-Mannose beträgt 1:2 und das Molekulargewicht liegt etwa bei 200 000 bis 300 000. Die α-D-Galactopyranosebausteine sind an jeden zweiten D-Mannosebaustein der Mannankette über eine (1,6)-glycosidische Bindung verknüpft.

Verbindungen dieser Art, deren freie OH-Funktionen durch Hydroxypropylierungs- und Carboxymethylierungsreaktionen partiell verethert sind, werden besonders bevorzugt.

Xanthan ist eine Verbindung, deren Molekulargewicht ca. 2 000 000 beträgt. Die Glucan-Kette des Xanthans besteht aus (1,4)-glycosidisch verknüpften β-D-Glucopyranoseeinheiten, wobei jeder zweite Glucosebaustein der Kette eine Seitenkette trägt, bestehend aus zwei β-D-Mannopyranoseeinheiten und einer β-D-Gluconsäureeinheit.

Die wässrigen Flüssigkeiten der erfindungsgemässen Leimharze enthalten in der Regel 45 bis 75 Gew.-%, vorzugsweise 50 bis 65 Gew.-%, Kondensationsprodukte aus Phenol, Formaldehyd und Resorcin (PFR) oder 50 bis 70 Gew.-%, vorzugsweise 55 bis 65 Gew.-%, Kondensationsprodukte aus Melamin, Harnstoff, Phenol und Formaldehyd (MUPF) und 0,01 bis 2,0 Gew.-%, vorzugsweise 0,01 bis 0,5 Gew.-% des in den Ansprüchen genannten Polysaccharids.

Darüber hinaus ist es möglich, neben den genannten, in wässriger Flüssigkeit Thixotropie verursachenden Polysacchariden auch andere Thixotropiermittel mitzuverwenden.

Zudem können weitere Bestandteile, z.B. Füllstoffe, Hilfsmittel, Biocide oder Fungizide zugesetzt werden.

Bei Verwendung von PFR-Harzen bereitet man die Leimflotte vorteilhaft nach dem Untermischverfahren, d.h. man mischt das Leimharz mit der Härtermischung. Dabei enthält im vorliegenden Fall vorzugsweise die Härtermischung das in wässriger Flüssigkeit Thixotropie verursachende genannte Polysaccharid. Man kann allerdings auch Leim und Härter getrennt voneinander auf das Brett auftragen.

So besteht eine Härtermischung beispielsweise aus 50 bis 90 Gew.-% an Füllstoffen, wie Weizennachmehl, Holzmehle, Kokosnussschalenmehl, Mandelschalenmehl, Olivensteinmehl, Pfirsichsteinmehl, China-Clay oder Bentonit, 9,99 bis 49,99 Gew.-% Paraformaldehyd und 0,01 bis 2 Gew.-% des Polysaccharids. Das Gewichtsverhältnis von Leimharz zu Härtermischung beträgt ca. 3:1 bis 7:1.

In vorangehenden Arbeitsprozessen werden dabei Füllstoffe, Hilfsmittel und Thixotropie verursachende Zusätze zur mit Wasser versetzten Härterkomponente und gegebenenfalls auch zum Leimharz gegeben. Die Leimharz- und Härterkomponenten werden dann kurz vor der Verarbeitung vermischt (untergemischt) oder gegebenenfalls auch getrennt voneinander aufgetragen.

Auch wenn man die Verleimung mit MUPF-Harzen durchfürt, kann man die Leimflotte entweder nach dem Untermischverfahren herstellen oder Leim und Härter getrennt voneinander auf das Brett auftragen.

Arbeitet man nach dem Untermischverfahren, so setzt man das genannte Polysaccharid hier vorzugsweise zunächst dem Leimharz zu, indem man z.B. das MUPF-Harz mit einem Füllstoff zusammenfügt, der ca. 0,5 bis 2 Gew.-% des in wässriger Flüssigkeit Thixotropie verursachenden genannten Polysaccharids enthält. Es werden üblicherweise die o.g. Füllstoffe verwendet. Das Gewichtsverhältnis von Leimharz zu Füllstoff beträgt dabei ca. 3:1 bis 7:1.

Danach vermischt man den Leim mit einem festen oder flüssigen Härter, wobei die an sich bekannten festen bzw. flüssigen Härter zur Anwendung kommen, die anorganische oder organische Säuren mit einem pKa-Wert < 4,5 wie Amidosulfonsäure, Maleinsäure, Ameisensäure oder Phosphorsäure oder auch wässrige Lösungen von Ammoniumsalzen starker Säuren oder von Alkalihydrogensalzen mehrbasiger starker Säuren enthalten.

Trägt man Leimharz und Härter getrennt voneinander auf, so empfiehlt es sich, das genannte Polysaccharid und gegebenenfalls auch den Füllstoff sowohl dem MUPF-Harz als auch der Härterlösung zuzusetzen.

Man vermischt MUPF-Harz, Füllstoff und genanntes Polysaccharid (analog dem Untermischverfahren) einerseits sowie Härterlösung, genanntes Polysaccharid und gegebenenfalls Füllstoff andererseits und trägt beide Mischungen getrennt voneinander auf das Brett auf.

Eine solche Härterlösung enthält z.B. 5 bis 50 Gew.-% Härter und 0,01 bis 2 Gew.-% des Polysaccharids. Das Gewichtsverhältnis von Leimharz zu Härter beträgt hier ca. 3 bis 10.

Das zugesetzte genannte Polysaccharid bewirkt, dass die Leimflotte (bzw. die Härterlösung) strukturviskos wird.

Unter starken mechanischen Belastungen, wie sie beim Beleimen der Bretter, wenn die Leimflotte durch die Düse strömt oder beim Zusammenpressen der beleimten Bretter erzeugt werden, wird die Flotte für die Zeitdauer der mechanischen Belastung dünnflüssig. Dies bedeutet, dass zum gewünschten Zeitpunkt (Leimauftrag, Pressen der Bretter) die Leimflotte fliessfähig ist, während sie nach Beendigung der mechanischen Belastung durch den Wiederanstieg ihrer Viskosität formstabil erhalten bleibt, beispielsweise als Tropfen, Schnur oder Schicht.

Mit dem erfindungsgemässen Verfahren werden die eingangs geschilderten Mängel behoben und man erhält Massivholzteile von hoher Qualität.

Die folgenden Beispiele sollen die Erfindung erläutern.

Die in den Beispielen genannten Teile und Prozente sind jeweils Gewichtsteile bzw. -prozente.

Beispiel 1

100 Teile einer 50%igen wässrigen Lösung eines Phenol-Resorcin-Formaldehyd-Kondensationsproduktes wurden mit 30 Teilen einer flüssigen Härtermischung versetzt, bestehend aus 12 Teilen Wasser, 3 Teilen Sorbitol, 0,05 Teilen eines partiell hydroxypropylierten und carboxymethylierten D-Galacto-D-mannans (mit einem Molekulargewicht von ca. 250 000), 1,5 Teilen China-Clay, 5,5 Teilen Kokosnussschalenmehl und 7,95 Teilen Paraformaldehyd.

Die homogen gemischte Leimflotte wurde direkt in der Leimauftragsmaschine verarbeitet und in Form von Schnüren, die einen Durchmesser von 2 mm aufwiesen, auf Holzbretter aufgetragen. Beim Senkrechtstapeln dieser Bretter konnte kein Abtropfen der Leimflotte beobachtet werden.

Beispiel 2

I) 100 Teile einer 50%igen wässrigen Lösung eines Phenol-Resorcin-Formaldehyd-Kondensationsproduktes wurden mit 0,5 Teilen China-Clay, 3 Teilen Kokosnussschalenmehl und 0,02 Teilen des in Beispiel 1 beschriebenen D-Galacto-D-mannans gemischt.
II) Aus 12 Teilen Wasser, 3 Teilen Sorbitol, 0,03 Teilen D-Galacto-D-mannan (siehe Beispiel 1), 1 Teil China-Clay, 2,55 Teilen Kokosnussschalenmehl und 7,95 Teilen Paraformaldehyd wurde eine homogene Mischung eines Flüssighärters hergestellt.

Die Komponenten I (Leim) und II (Härter) wurden a) nach vorheriger Untermischung und b) getrennt auf die zu verleimenden Holzlamellen aufgetragen.

In Fall a) wurde die Leim-Härter-Mischung als Film aufgetragen. Dieser Film tropfte beim Senkrechtstellen der beleimten Lamellen nicht ab.

Im Fall b) wurde die Leimflotte I als Film und die Härterflotte II auf den Leimfilm in Form von Schnüren, die einen Durchmesser von 3 mm aufwiesen, aufgetragen. Beim Senkrechtstellen der beleimten Lamellen war kein Abtropfen bzw. Ablaufen des Auftrags zu beobachten.

Beispiel 3

100 Teile eines wässrigen Kondensationsproduktes aus Melamin, Harnstoff, Phenol und Formaldehyd, dessen Herstellung in der EP-A 69 267 beschrieben ist, wurden mit 19,6 Teilen Kokosnussschalenmehl und 0,4 Teilen eines D-Galacto-D-mannans (siehe Beispiel 1) homogen gemischt.

Als Härter dienten 10 Teile einer 25%igen wässrigen Ameisensäurelösung, der 1,96 Teile Kokosnussschalenmehl und 0,04 Teile D-Galacto-D-mannan (siehe Beispiel 1) zugesetzt wurden.

Analog Beispiel 2 wurden Leim und Härter a) nach vorheriger Untermischung und b) getrennt auf die zu verleimenden Holzlamellen aufgetragen. Auch hier war beim Senkrechtstellen der beleimten Lamellen in keinem Fall ein Abtropfen bzw. Ablaufen des Auftrags zu beobachten.

Beispiel 4

100 Teile eines wässrigen Kondensationsproduktes aus Melamin, Harnstoff, Phenol und Formaldehyd, dessen Herstellung in der EP-A 69 267 beschrieben ist, wurden mit 16,0 Teilen Kokosnussschalenmehl und 0,07 Teilen Xanthan (mit einem Molekulargewicht von ca. 2 000 000) homogen gemischt.

Als Härter dienten 10 Teile einer 25%igen wässrigen Ameisensäurelösung, der 3,0 Teile Kokosnussschalenmehl und 0,05 Teile Xanthan zugesetzt wurden.

Analog Beispiel 2 wurden Leim und Härter a) nach vorheriger Untermischung und b) getrennt auf die zu verleimenden Holzlamellen aufgetragen. Auch hier war beim Senkrechtstellen der beleimten Lamellen in keinem Fall ein Abtropfen bzw. Ablaufen des Auftrags zu beobachten.

**Patentansprüche**

1. Verfahren zum Verleimen von Massivholz mittels Leimharzen auf der Basis von Kondensationsprodukten aus Phenol, Formaldehyd und Resorcin oder auf der Basis von Kondensationsprodukten aus Melamin, Harnstoff, Phenol und Formaldehyd, unter Verwendung eines Polysaccharids, dadurch gekennzeichnet, dass die Leimharze und/oder Härtermischungen 0,01 bis 2,0 Gew.-% eines D-Galacto-D-mannans oder eines Xanthans enthalten.

2. Verfahren gemäss Anspruch 1, dadurch gekennzeichnet, dass man ein D-Galacto-D-mannan verwendet, das partiell verethert ist.

3. Leimharz, enthaltend 45 bis 75 Gew.-% Kondensationsprodukte aus Phenol, Formaldehyd und Resorcin oder 50 bis 70 Gew.-% Kondensationsprodukte aus Melamin, Harnstoff, Phenol und Formaldehyd und 0,01 bis 2,0 Gew.-% eines D-Galacto-D-mannans, das partiell verethert sein kann, oder eines Xanthans.

**Revendications**

1. Procédé pour coller du bois massif au moyen de résines-colles à base de produits de condensation de phénol, de formaldéhyde et de résorcine ou à base de produits de condensation de mélamine, d'urée, de phénol et de formaldéhyde, avec utilisation d'un polysaccharide, caractérisé en ce que les résines-colles et/ou mélanges accélérateurs contiennent 0,01 à 2,0% en poids d'un D-galacto-D-mannane ou d'un xanthané.

2. Procédé selon la revendication 1, caractérisé en ce qu'on utilise un D-galacto-D-mannane qui est partiellement éthérifié.

3. Résine-colle contenant 45 à 75% en poids de produits de condensation de phénol, de formaldéhyde et de résorcine ou 50 à 70% en poids de produits de condensation de mélamine, d'urée, de phénol et de formaldehyde et 0,01 à 2,0% en poids d'un D-galacto-D-mannane, qui peut être partiellement éthérifié, ou d'un xanthane.

## Claims

1. A process for gluing solid wood with an adhesive based on a condensate of phenol, formaldehyde and resorcinol, or on a condensate of melamine, urea, phenol and formaldehyd, and co-used with a polysaccharide, wherein the adhesive and/or hardener mixture contains from 0.01 to 2.0% by weight of a D-galacto-D-mannan or a xanthane.

2. A process as claimed in claim 1, wherein a partially etherified D-galacto-D-mannan is used.

3. An adhesive containing from 45 to 75% by weight of a condensate of phenol, formaldehyd and resorcinol, or from 50 to 70% by weight of a condensate of melamine, urea, phenol and formaldehyde, and from 0.01 to 2.0% by weight of an optionally partially etherified D-galacto-D-mannan, or of a xanthane.